# EUROPEAN PATENT APPLICATION

(11) **EP 2 996 005 A1**
(43) Date of publication of application: **16.03.2016**
(21) Application number: 15181930.7
(22) Date of filing: 21.08.2015
(51) Int. Cl.: G05B 23/02, D01H 13/14

(54) **MANAGEMENT APPARATUS, CONTROL APPARATUS, TEXTILE MACHINE MANAGEMENT SYSTEM, AND MANAGEMENT METHOD FOR TEXTILE MACHINE**

(30) Priority: 09.09.2014 JP 2014182842
(71) Applicant: Murata Machinery, Ltd., Kyoto-shi, Kyoto 601-8326 (JP)
(72) Inventor: Susami, Hiroyuki, Kyoto, Kyoto 612-8686 (JP)
(74) Representative: Weickmann & Weickmann

(57) **Abstract**

A management apparatus (80) controls a machine control apparatus (11) included in an automatic winder (60). In the management apparatus (80), a communication section (91) communicates with the machine control apparatus (11), an operation information input section (92) receives input of operation information about the automatic winder (60), an analysis section (94) analyzes the operation information input into the operation information input section (92), a transmission section (95) transmits a result of analysis obtained in the analysis section (94) to the machine control apparatus (11) via the communication section (91), and a message input section (96) receives input of a message. When transmitting the analysis result to the machine control apparatus (11), the transmission section (95) transmits the analysis result together with the message input to the message input section (96).

## Description

### BACKGROUND OF THE INVENTION

### 1. Field of the Invention

The present invention mainly relates to a management apparatus that controls a control apparatus included in a textile machine.

### 2. Description of the Related Art

A system that includes a management apparatus that collects information from plural textile machines and analyzes the collected information has been known in the art. In such a system, because statuses of the plural textile machines can be easily and collectively recognized, ready detection of abnormalities and the like, if any, becomes possible.

Japanese Patent Application Laid-Open No. H6-127828 discloses a system that diagnoses a failure of a machine main body of a textile machine having plural winding units. The machine main body includes a control apparatus that is connected to a host management apparatus via a transmission line. The operation information about winding units of the machine main body is input from the control apparatus to the management apparatus. A diagnosis apparatus is connected to the management apparatus and the diagnosis apparatus receives the operation information from the management apparatus, and if any abnormality has occurred, diagnoses the content of the abnormality and displays the result of diagnosis on a screen. With this configuration, causes of failures can be readily diagnosed.

Japanese Patent Application Laid-Open No. 2002-137867 discloses a method in which, in a yarn winding machine in which bobbin holders are driven by induction motors, sliding information about sliding of the induction motors of multiple winding machines is collected and statistical processes are carried out on the collected sliding information. Also, a configuration is disclosed in which setting computers, which perform settings and which are installed in factories, are connected to the Internet. Also, the setting computer in each mill transmits sliding information about induction motors to a server computer connected to the Internet. The server computer performs statistical processes on the sliding information and returns the result to the setting computers. With this configuration, the maintenance and management of respective winding machines can be carried out on a large scale.

Japanese Patent Application Laid-Open No. H8-268825 discloses a configuration in which each of plural spinning machines includes a spinning machine computer and each spinning machine computer transfers sensor signals from the spinning machine to a process control computer via a signal transmission network. Each spinning machine includes 200 spinning units. The process control computer verifies the status of spinning chambers. With this configuration, sources of troubles and failures can be more clearly identified, and thus escalation of possibilities of troubles or failures can be prevented.

As explained above, the configuration is known in which information is transmitted from plural textile machines to a host apparatus and the host apparatus performs predetermined processes on the received information.

Meanwhile, in a mill in which multiple textile machines are installed, a manager, maintenance persons, and operators, respectively, have separate roles to play. The manager is a person in charge of control and management of plural textile machines and he is the one who operates the host apparatus. The maintenance persons perform repair, exchange of consumables, and periodic cleaning of the plural textile machines. The operators are under control of the manager and they perform routine operations and the like. Data of plural textile machines are collected and analyzed by the host apparatus. The manager examines the result and gives instructions to maintenance persons to achieve stable product quality and improve production efficiency. The maintenance persons perform the operations in accordance with the instructions given by the manager.

The manager may want to give some instructions to the maintenance persons and/or the operators (hereinbelow, "operators and the like"). However, if the host apparatus and the textile machines are installed at distant physical locations, direct coming and going between the host apparatus and the textile machines may be difficult. For example, if the host apparatus is installed in a quality management building and the textile machines are installed in a production building, then coming and going between the host apparatus and the textile machines may be difficult. If a large number of textile machines are installed and thus a large number of maintenance persons and/or operators are working on them, or if the operators and the like are frequently changed, it is difficult to correctly and sufficiently convey instructions from the manager to the maintenance persons and/or the operators.

In this regard, in the configuration disclosed in Japanese Patent Applications Laid-Open Nos. H6-127828 and 2002-137867, result of processes performed by the host apparatus can be transmitted from the host apparatus to client machines. However, the result of diagnosis for the client machines, statistical information about the client machines, or the like only can be transmitted from the host apparatus to the client machines. That is, the conventional configuration does not at all consider any method for flexibly transmitting information from the manager who operates the host apparatus. Japanese Patent Application Laid-Open No. H8-268825 also does not disclose any configuration for transmitting information from the host apparatus to the textile machines.

### SUMMARY OF THE INVENTION

An object of the invention is to provide a configuration capable of efficiently transmitting information from the manager who operates the management apparatus to the operators and the like who operate textile machines.

A management apparatus according to an aspect of the present invention includes a communication section, an operation information input section, an analysis section, and a transmission section. The communication section communicates with a control apparatus of a textile machine. The operation information input section receives input of operation information about the textile machine. The analysis section analyzes the operation information input to the operation information input section. The transmission section transmits a result of the analysis obtained in the analysis section to the control apparatus via the communication section. The message input section receives input of a message. The transmission section, when transmitting the analysis result to the control apparatus, transmits the analysis result together with the message input to the message input section.

A control apparatus included in a textile machine according to another aspect of the present invention includes a communication section, a transmission section, a receiving section, and an output section. The communication section communicates with a management apparatus. The transmission section transmits operation information about the textile machine to the management apparatus via the communication section. The receiving section receives a result of an analysis performed on the operation information from the management apparatus via the communication section. The output section outputs the analysis result received from the management apparatus. The output section, upon receiving a message from the management apparatus together with the analysis result, outputs the received message.

A textile machine management system according to still another aspect of the present invention includes a textile machine and a management apparatus. The textile machine includes a control apparatus. The management apparatus manages the textile machine. The management apparatus includes a management apparatus-side communication section, an operation information input section, an analysis section, a transmission section, and a message input section. The management apparatus-side communication section communicates with the control apparatus. The operation information input section receives input of operation information about the textile machine. The analysis section analyzes the operation information input to the operation information input section. The transmission section transmits a result of an analysis obtained in the analysis section to the control apparatus via the management apparatus-side communication section. The message input section receives input of a message. The control apparatus of the textile machine includes a textile machine-side communication section, a receiving section, and an output section. The textile machine-side communication section communicates with the management apparatus. The receiving section receives a result of an analysis performed on the operation information from the management apparatus via the textile machine-side communication section. The output section outputs the analysis result received from the management apparatus. The transmission section of the management apparatus, when transmitting the analysis result to the control apparatus, transmits the analysis result together with the message input to the message input section. The output section of the control apparatus, upon receiving the message from the management apparatus together with the analysis result, outputs the received message.

A management method for a textile machine according to still another aspect of the present invention includes inputting operation information about the textile machine to a management apparatus; analyzing the operation information by the management apparatus; inputting a message by the management apparatus; transmitting a result of analysis obtained in the analyzing to a control apparatus included in the textile machine together with the message; and outputting the message together with the analysis result in the control apparatus.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a front view that schematically illustrates a configuration of an automatic winder managed by a management system according to an embodiment of the present invention.
FIG. 2 is a view that illustrates a network structure of an automatic winder management system.
FIG. 3 is a functional block diagram that illustrates configurations of a machine control apparatus and a management apparatus of the automatic winder.
FIG. 4 is a view that illustrates an example of a screen displayed in the management apparatus to enable verification of sending of analysis result.
FIG. 5 is a view that illustrates a screen displayed on a display when an analysis result with a message is received by the machine control apparatus of the automatic winder.
FIG. 6 is a view that illustrates an example in which an analysis result and a message are displayed on a display of the machine control apparatus.
FIG. 7 is a view that illustrates an example of a screen displayed in the management apparatus when a message is transmitted without accompanying an analysis result.

### DETAILED DESCRIPTION

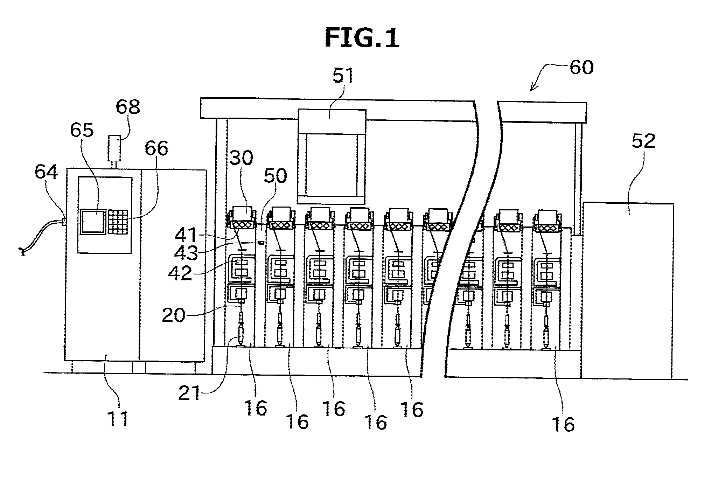

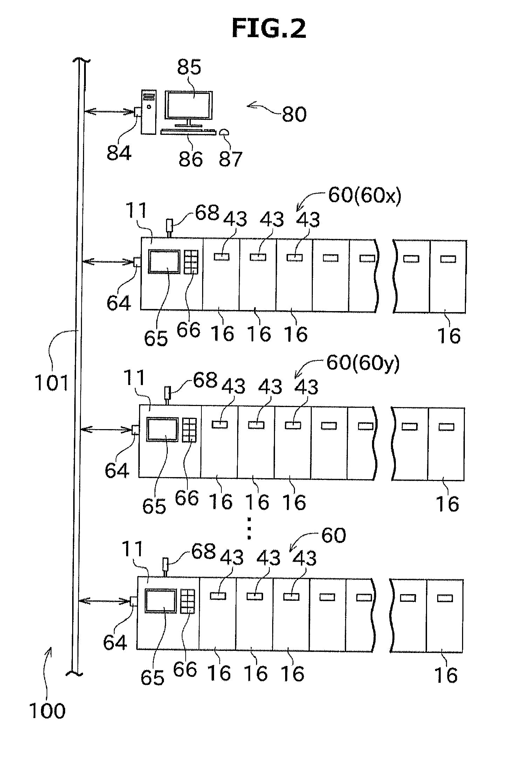

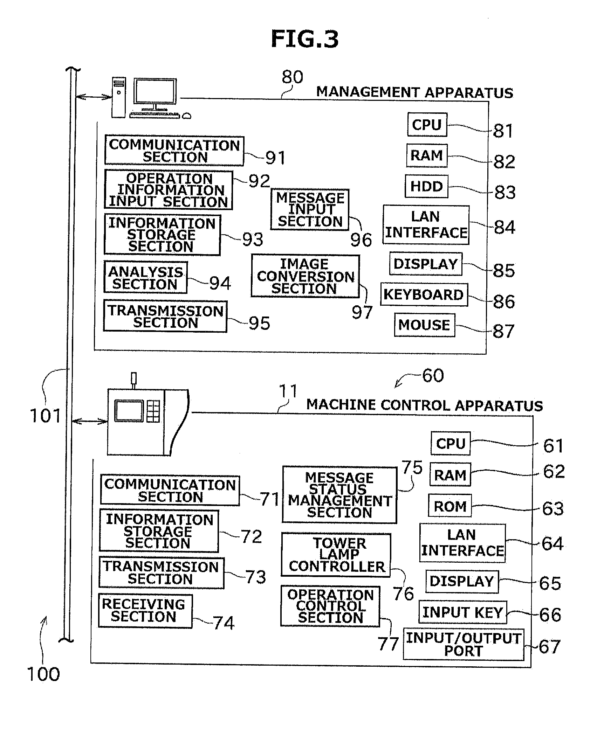

Exemplary embodiments of the present invention will be explained below with reference to the accompanying drawings. FIG. 1 is a front view that schematically illustrates a configuration of an automatic winder 60 managed by a management system according to an embodiment of the present invention. FIG. 2 is a view that illustrates a network structure of an automatic winder management system 100. FIG. 3 is a functional block diagram that illustrates configurations of a machine control apparatus 11 of the automatic winder 60 and a management apparatus 80.

Referring to Fig. 1, the automatic winder (textile machine, yarn winding machine) 60 unwinds a yarn 20 from a yarn feeding bobbin 21 on which a yarn spun by a spinning machine has been wound, and winds the unwound yarn 20 onto a winding bobbin to form a package 30 with the yarn 20 of a predetermined length. Referring to Fig. 2, multiple automatic winders 60 are installed in a spinning mill, and the respective automatic winders 60 are an object of the management by the automatic winder management system (textile machine management system) 100 according to the present embodiment.

Referring to Fig. 1, the automatic winder 60 includes the machine control apparatus (control apparatus) 11, plural winder units (yarn winding units, fiber processing units) 16 arranged side-by-side, a yarn feeding bobbin supplying device 52, and an automatic doffer 51.

The yarn feeding bobbin supplying device 52 supplies the yarn feeding bobbins 21 to the respective winder units 16 by transporting them along a supply path (not illustrated). When the package 30 of a winder unit 16 becomes fully wound, the automatic doffer 51 travels to the location of the corresponding winder unit 16 to collect the package 30 and supply an empty winding bobbin. The operations of the yarn feeding bobbin supplying device 52 and the automatic doffer 51 are controlled by the machine control apparatus 11.

Each winder unit 16 winds the yarn 20 unwound from the yarn feeding bobbin 21 onto the winding bobbin while traversing the yarn 20 by using a traverse drum 41 to form the package 30. The winder unit 16 includes a clearer (yarn defect detecting device) 42 that monitors the thickness of the yarn 20 travelling through the winder unit 16. Upon detecting any defect, the clearer 42 eliminates the defect. Each winder unit 16 includes a unit lamp 43 that turns on if any abnormality has occurred in the winder unit 16.

Each winder unit 16 includes a unit controller 50. The unit controller 50 includes, although not shown in the diagrams, a central processing unit (CPU), a read-only memory (ROM), a random access memory (RAM), and input/output ports. The ROM stores therein a winding computer program that controls the components (e.g., the traverse drum 41 and the like) of the winder unit 16. The CPU performs winding of the yarn by controlling the components by loading and executing the winding computer program from the ROM onto the RAM.

The input/output ports included in each unit controller 50 are connected to the machine control apparatus 11 so that information can be exchanged between the respective unit controllers 50 and the machine control apparatus 11. With this configuration, the plural winder units 16 included in the automatic winder 60 can be centrally controlled by the machine control apparatus 11.

The machine control apparatus 11 is configured as a microcomputer and includes a display (output section, display section) 65, input keys 66, and a local area network (LAN) interface 64. The LAN interface 64 of each machine control apparatus 11 is connected to, as illustrated in FIG. 2, a LAN 101, which is a network built in the mill. The automatic winder 60 includes a tower lamp (notification section) 68 for notifying to the operators and the like a state of the machine requiring attention.

The machine control apparatus 11 includes, as shown in Fig. 3, a CPU 61, a RAM 62, a ROM 63, and input/output ports 67. The ROM 63 stores therein a control computer program that controls the winder unit 16, the automatic doffer 51, the yarn feeding bobbin supplying device 52, and the like. The CPU 61 controls winding of the yarn and the like by the winder unit 16 by loading and executing the control computer program from the ROM 63 onto the RAM 62.

The input/output ports 67 of the machine control apparatus 11 are connected to not-shown input/output ports of the unit controller 50 included in each winder unit 16 via an appropriate communication line. With this configuration, the machine control apparatus 11 can set the yarn winding conditions to the winder unit 16 by transmitting a variety of yarn winding conditions to the unit controller 50 of each winder unit 16. The machine control apparatus 11 receives, from the unit controller 50 of the winder unit 16, information about the present state of winding of the yarn (yarn winding state information) in each winder unit 16.

The yarn winding condition includes items such as the winding speed, the yarn count, the winding tension, the amount of the winding in a package, the weight of the package, and information relating to the yarn defects. The yarn winding state information includes information such as the current diameter of the package, the current winding speed, the state of occurrence of yarn breakage, and the detection state of the yarn defects. The yarn winding state information includes defect information, for example. The defect information includes the number of winder units 16 in which a defect has occurred and the type of the defect, for example.

Specifically, the operators and the like can set the yarn winding conditions by performing an appropriate operation to display a yarn winding condition setting menu on the display 65 of the machine control apparatus 11 and by inputting numerical values by pressing the input keys 66. The setting values for the yarn winding conditions can be transmitted to one or more designated winder units 16 only, or can be transmitted collectively to all the winder units 16.

The machine control apparatus 11 is configured to display the yarn winding state information in real time, which varies from moment to moment. The machine control apparatus 11 is configured to store therein the past history of the yarn winding state information, and displaying a graph produced by plotting the frequency of occurrence of yarn defects on a time axis, for example, on the display 65.

As explained above, the operators and the like can collectively set the yarn winding condition for the plural winder units 16 from the machine control apparatus 11 and also collectively see the yarn winding state information of the plural winder units 16 from the machine control apparatus 11. Accordingly, the management of the automatic winder 60 can be efficiently performed.

Because the yarn winding status information is information about the operation of the automatic winder 60, in the following description the yarn winding state information may be referred to as "operation information". Moreover, because the yarn winding condition is information about the settings for the automatic winder 60, the yarn winding conditions may hereinafter be referred to as "setting information". The operation information and the setting information are transmitted to the later-explained textile machine management apparatus 80 to be subjected to various analyses to achieve improvement in the production efficiency and the quality of the package 30. However, the information transmitted from the automatic winder 60 to the management apparatus 80 is not limited to the operation information and the setting information and can include only operation information, for example, or can include other information in addition to the operation information and the setting information.

Next, the automatic winder management system 100 including the automatic winder 60 and the management apparatus 80 will be explained in detail.

The automatic winder management system 100 includes the management apparatus (host management apparatus) 80 that controls and manages the plural automatic winders 60. The management apparatus 80 is operated mainly by the manager who manages the quality and/or the production efficiency of the package 30.

The machine control apparatus 11 included in the respective plural automatic winders 60 (automatic winders 60x, 60y, ...) is connected to the LAN 101 provided in the mill as illustrated in FIG. 2. The management apparatus 80 is connected to the LAN 101. With this configuration, various pieces of information can be exchanged between the machine control apparatus 11 and the management apparatus 80.

To begin with, an electrical configuration of the management apparatus 80 will be explained. In the present embodiment, the management apparatus 80 is configured as a desktop type personal computer and includes a display section 85, a keyboard 86, a mouse 87, and a LAN interface 84. The LAN interface 84 is connected to the LAN 101 as illustrated in FIG. 2.

The management apparatus 80 includes, as illustrated in FIG. 3, a CPU 81, a RAM 82, and a hard disk drive (HDD) 83 that is a nonvolatile storage section 83. The HDD 83 stores therein a management computer program for controlling and managing the machine control apparatuses 11 of the plural automatic winders 60.

The hardware and the software cooperate so that the management apparatus 80 can function as a communication section (management apparatus-side communication section) 91, an operation information input section 92, an information storage section (first storage section) 93, an analysis section 94, a transmission section 95, a message input section 96, and an image conversion section 97.

The communication section 91 is configured to perform data communication with the machine control apparatus 11 of the automatic winder 60 via the LAN 101.

The operation information input section 92 is configured to receive input of the operation information and the setting information from the machine control apparatus 11 of the automatic winder 60.

In the present embodiment, the operation information input section 92 receives input of the operation information and the setting information from the machine control apparatus 11 of the automatic winder 60 via the communication section 91. However, in an alternative configuration, for example, a removable storage device (e.g., a universal serial bus (USB) memory device, a memory card, or the like) can be connected to the machine control apparatus 11 and the operation information and the setting information can be copied to the removable storage device, and after that, the removable storage device can be connected to the management apparatus 80 and the operation information and the setting information can be input to the operation information input section 92 from the removable storage device.

The information storage section 93 includes the HDD 83, for example, and is capable of storing therein, for a specific time period, the operation information and the setting information that have been input to the operation information input section 92.

The analysis section 94 performs predetermined analysis operations (calculations) on the operation information and the setting information that is input to the operation information input section 92 and stored in the information storage section 93 and obtains an analysis result. The analysis section 94 can perform a high-level analysis of the winding efficiency of the winder unit 16 and/or the frequency of occurrence of defects detected by the clearer 42 by using standard deviation, for example. The analysis section 94 can generate an image (e.g., a graph image) by graphically representing the obtained analysis result to facilitate understanding of a user (the manager who operates the management apparatus 80) of the management apparatus 80.

The transmission section 95 transmits the result of the analysis obtained in the analysis section 94 to the machine control apparatus 11 of the automatic winder 60 via the communication section 91. If input of a message is received by the later-explained message input section 96, the transmission section 95 transmits the content of the message (a message image generated by the later-explained image conversion section 97) to the machine control apparatus 11 of the automatic winder 60 together with the analysis result. Further, if a command relating to an operation of the automatic winder 60 is given by the user of the management apparatus 80, the transmission section 95 transmits the command together with the analysis result.

The message input section 96 receives input of a message (character string) that the user of the management apparatus 80 intends to transmit to the operators and the like of the automatic winder 60 via the keyboard 86, for example. In an alternative configuration, the message can be input as voice instead of or in addition to the keyboard input. In the configuration in which the message can be input by voice input, the message input section 96 includes a voice recognition function for recognizing the input voice and converting the recognized voice into text data.

The image conversion section 97 converts the character string input in the message input section 96 into an image that denotes the message (message image).

Next, an electrical configuration of the machine control apparatus 11 of the automatic winder 60 will be explained.

Specifically, in the respective automatic winders 60, the ROM 63 of the machine control apparatus 11 stores therein, in addition to the control computer program, an information transmitting/receiving computer program for performing communication with the management apparatus 80. The hardware such as the CPU 61, the RAM 62, and the ROM 63 and the software such as the information transmitting/receiving computer program cooperate so that the machine control apparatus 11 can function as a communication section (textile machine-side communication section) 71, an information storage section (second storage section) 72, a transmission section 73, a receiving section 74, a message status management section 75, a tower lamp controller (information controller) 76, and an operation control section 77.

The communication section 71 performs data communication with the management apparatus 80 via the LAN 101.

The information storage section 72 includes a non-volatile storage device (e.g., an electrically erasable programmable ROM (EEPROM)) and is capable of storing therein, for a specific time period, the operation information and the setting information about the automatic winder 60.

The machine control apparatus 11 has an analysis function similar to that of the analysis section 94 of the management apparatus 80. The machine control apparatus 11 analyzes the operation information that has been stored in the information storage section 72 and displays the analysis result on the display 65. However, the costs may increase substantially if a large-capacity storage device is installed in the machine control apparatus 11 that is a microcomputer. Therefore, a configuration in which the information storage section 72 can store the operation information and the setting information corresponding to a long time period is not advisable. Accordingly, it is difficult for the analysis function included in the machine control apparatus 11 alone to analyze the operation information and the setting information corresponding to a long time period. On the other hand, because the management apparatus 80 is configured as a general-purpose personal computer, if the hard disk drive of the management apparatus 80 is used as the information storage section 93, the operation information and the setting information corresponding to a time period longer than the time period for which the operation information and the setting information can be stored in the information storage section 72 of the machine control apparatus 11 with low costs. Therefore, if an analysis of a large number of pieces of operation information and setting information corresponding to a long time period is to be performed, it is suitable to perform such an analysis on the side of the management apparatus 80.

The transmission section 73 transmits the operation information about the automatic winder 60 to the management apparatus 80 via the communication section 71.

The receiving section 74 receives the result of the analysis of the operation information and the setting information from the management apparatus 80 via the communication section 71. The received analysis result can be displayed on the display 65 in accordance with an appropriate operation on the input keys 66 by the operators and the like. If the receiving section 74 has received data of a message together with the analysis result, the operators and the like can perform an appropriate operation on the input keys 66 to display the message on the display 65 together with the analysis result.

The message status management section 75 is configured to store therein, for the respective messages received by the receiving section 74, information about whether the message has been displayed on the display 65 (to paraphrase this, whether the operators and the like have performed an operation for displaying the message). The already-read/unread statuses of the messages are transmitted to the management apparatus 80 via the communication section 71 and can be displayed on the display section 85 of the management apparatus 80 as a list, for example. Accordingly, the user of the management apparatus 80 can readily verify whether a message has been read by the operators and the like of each automatic winder 60.

When the analysis result and/or the message transmitted from the LAN interface 84 is received by the receiving section 74, the tower lamp controller 76 lights or flashes the tower lamp 68 included in the automatic winder 60. With this configuration, the operators and the like can be prompted to check the analysis result and/or the message.

When a command relating to the operation of the automatic winder 60 is received from the management apparatus 80 via the receiving section 74, the operation control section 77 performs a control so that the automatic winder 60 operates in accordance with the received command. An example of the command relating to the operation of the automatic winder 60 includes, but is not limited to, a command relating to lighting the unit lamp 43 of the winder unit 16 that needs maintenance. With this configuration, the operation of the automatic winder 60 can be remotely controlled from the management apparatus 80.

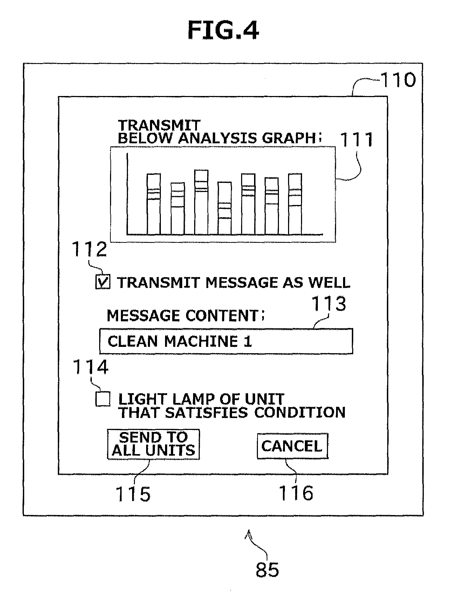

Next, an example will be explained with reference to FIGS. 4 to 6 where an analysis result with a message is transmitted by broadcast transmission from the management apparatus 80 to all the automatic winders 60.

FIG. 4 illustrates a transmission verification window 110, which is displayed on the display section 85 when an analysis graph indicating the analysis result obtained by the analysis performed by the management apparatus 80 is transmitted to the automatic winders 60. The display on this transmission verification window 110 is implemented by the management computer program installed in the management apparatus 80.

An analysis graph image 111 is displayed in this transmission verification window 110, and a message sending check box 112, a message text box 113, an object unit lighting check box 114, a send to all units button 115, and a cancel button 116 are displayed in the transmission verification window 110.

The analysis graph image 111 is an image of the analysis graph to be transmitted from the management apparatus 80 to the machine control apparatus 11 as a preview image prior to transmission to the automatic winder 60.

The message sending check box 112 is used by the user of the management apparatus 80 to designate as to whether to send the message received from the user to the operators and the like of the automatic winder 60 together with the analysis graph image 111. If the user has checked the message sending check box 112 by operating the mouse 87 and the like, the message input in the later-explained message text box 113 is transmitted together with the analysis graph image 111 when the analysis graph image 111 is transmitted from the management apparatus 80 to the automatic winder 60. On the contrary, if the message sending check box 112 is not checked, no message is transmitted.

The message text box 113 is a text box that is enabled when the message sending check box 112 is checked. The user of the management apparatus 80 can designate a message character string to be transmitted by inputting a desired character string in the message text box 113 by using the keyboard 86 and the like. In this manner, the management apparatus 80 displays the analysis result (the analysis graph image 111) and the message area (the message text box 113) on the common display (screen) 85 at the same time. More specifically, the management apparatus 80 allows the user to perform an operation for inputting a message while the analysis result has been displayed on the display section 85. With this configuration, the user of the management apparatus 80 can input the message while seeing the analysis result when performing an operation for inputting the message to be transmitted to the automatic winder 60.

The object unit lighting check box 114 is used by the user to designate as to whether to transmit, to the machine control apparatus 11, a command relating to lighting the unit lamp 43 of the winder unit 16 that satisfies a specific condition, together with the analysis graph image 111. An example of such condition includes, but is not limited to, a state where the winding efficiency is below a specific value. If the user has checked the object unit lighting check box 114 by operating the mouse 87 and the like, a command relating to lighting the unit lamp 43 of the winder unit 16 that satisfies the specific condition is transmitted from the management apparatus 80 to the machine control apparatus 11 of the automatic winder 60 together with the analysis graph image 111.

Upon checking the display on the display section 85 as illustrated in FIG. 4, the user of the management apparatus 80 operates the mouse 87 and clicks the send to all units button 115 in the transmission verification window 110. With this operation, data of the analysis graph image 111 is transmitted from the management apparatus 80 to the machine control apparatus 11 of the automatic winder 60. If the transmission of the analysis graph image 111 is to be cancelled, the user can click the cancel button 116.

If the message sending check box 112 is checked, the image conversion section 97 of the management apparatus 80 converts the character string that is input in the message text box 113 into an image. Conversion of the character string into an image is possible as the management computer program executed by the management apparatus 80 previously includes font data for drawing the character string. The transmission section 95 of the management apparatus 80 transmits the obtained message image to the machine control apparatus 11 of the automatic winder 60 together with the analysis graph image 111. The data of the analysis graph image 111 and the data of the message image can be transmitted from the transmission section 95 to the automatic winder 60 (the machine control apparatus 11) in a bundled form as one piece of data or can be transmitted separately.

If the object unit lighting check box 114 is checked, the transmission section 95 of the management apparatus 80 transmits the command relating to lighting the unit lamp 43 of the winder unit 16 that satisfies the specific condition to the machine control apparatuses 11 of all the winder units 16 installed in the mill together with the analysis graph image 111.

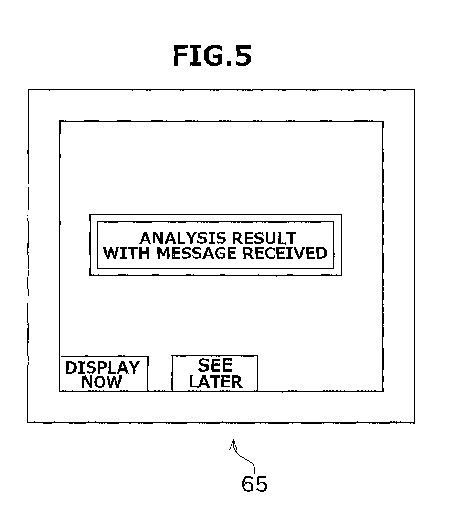

Upon receiving the data of the analysis graph image 111, the machine control apparatus 11 included in the respective automatic winders 60 displays on the display 65, as illustrated in FIG. 5, a screen that notifies that the analysis result has been received. FIG. 5 illustrates an example of a display displayed when data of the analysis graph image 111 has been received with the message image being added thereto. In this case, the tower lamp controller 76 of the automatic winder 60 lights the tower lamp 68 included in the automatic winder 60 to prompt the operators and the like to recognize this state.

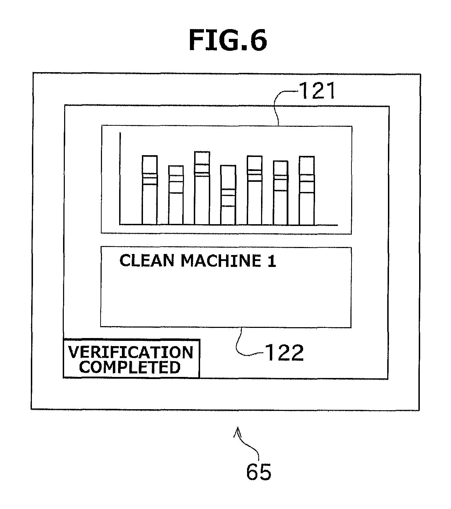

Upon recognizing that the analysis result has been received, the operators and the like appropriately operate the input keys 66 to select "DISPLAY NOW" from a menu displayed on a lower end of the screen illustrated in FIG. 5. With this operation, as illustrated in FIG. 6, an analysis graph image 121 is displayed together with a message image 122. The operators and the like can easily check the analysis result by seeing the displayed analysis graph image 121 and can easily understand the contents of the instruction from the user of the management apparatus 80 by seeing the message image 122 and perform various operations based on the recognition and the understanding.

If the machine control apparatus 11 has received the command relating to lighting the unit lamp 43 of the winder unit 16 that satisfies a specific condition, the operation control section 77 verifies whether any of the winder units 16 satisfies the condition identified in the command, and if a winder unit 16 satisfies the condition, lights the unit lamp 43 of that winder unit 16. With this configuration, the operator or the maintenance persons can easily identify the winder unit 16 that requires an operation and perform the operation on the identified winder unit 16.

As explained above, the user of the management apparatus 80 can freely input the content of the message (via the message text box 113). For example, the user of the management apparatus 80 can input supplementary explanation to the analysis result, an instruction for the operation by the operators and the like, or the like. Accordingly, information can be transmitted more flexibly and in more detailed form from the user of the management apparatus 80 compared with a case in which only the analysis graph image 121 is simply transmitted. In addition, because the analysis result and the message can be transmitted to the plural automatic winders 60 at the same time, information can be transmitted accurately and efficiently from the user of the management apparatus 80 even in a large-scale mill in which multiple automatic winders 60 are installed.

After having seen the analysis graph image 121 and the message image 122, the operators and the like terminate the display of the analysis graph image 121 and the message image 122 by selecting "VERIFICATION COMPLETED" in the menu.

As explained above, the message input by the user of the management apparatus 80 is converted into an image on the side of the management apparatus 80, and the message in the form of the image (the message image 122) is displayed on the side of the automatic winder 60 (the machine control apparatus 11). Accordingly, if multilingual support of the message is to be performed, it is sufficient to prepare only font data of languages of respective countries for drawing the message character string on the side of the management apparatus 80, and thus it is not necessary to install font data, which often has a large data size, in each machine control apparatus 11. Accordingly, the message can be displayed on the display 65 in various different languages with a simple configuration of the machine control apparatus 11.

Assume that the machine control apparatus 11 of the automatic winder 60 has received the data of the analysis graph image 111 and the message image, for example, while the operators and the like are carrying out other operations by using the machine control apparatus 11, and the operators and the like are not in a position to immediately see the received content. In such a case, the operators and the like can select "SEE LATER" from the menu on the screen illustrated in FIG. 5. With this operation, the screen displayed on the display 65 returns to the display of a default screen. Subsequently, when the operators and the like are in a position to see the received content, the operators and the like can display the screen illustrated in FIG. 6 by performing an appropriate operation by using the input keys 66.

At the instant at which the data of the message image is received, the message status management section 75 sets "unread" as the status of the message. On the contrary, if the message image 122 has been displayed as illustrated in FIG. 6, the message status management section 75 sets "already read" as the status of the message. In this manner, information about whether the message has been seen by the operators and the like can be recorded. The record (information) of the already-read/unread status of the message is transmitted to the management apparatus 80 via the LAN 101, and thus can be checked by the user of the management apparatus 80.

The machine control apparatus 11 can include an operation status management section in addition to or instead of the message status management section 75. When the operation instructed from the management apparatus 80 as the message is completed, the operators and the like input information indicating that the operation has been completed to the machine control apparatus 11. The machine control apparatus 11 stores therein the operation completion information (information about whether the operation has been completed) in association with message identification information. The machine control apparatus 11 also transmits the operation completion information to the management apparatus 80 together with the message identification information at any time or at an appropriate timing. The management apparatus 80, which has stored therein the message (operation instruction) transmitted to the machine control apparatus 11, updates status information (operation completion information) about the stored message if the operation completion information has been received from the machine control apparatus 11. The management apparatus 80 can manage information about whether the operation instructed in the message has been completed.

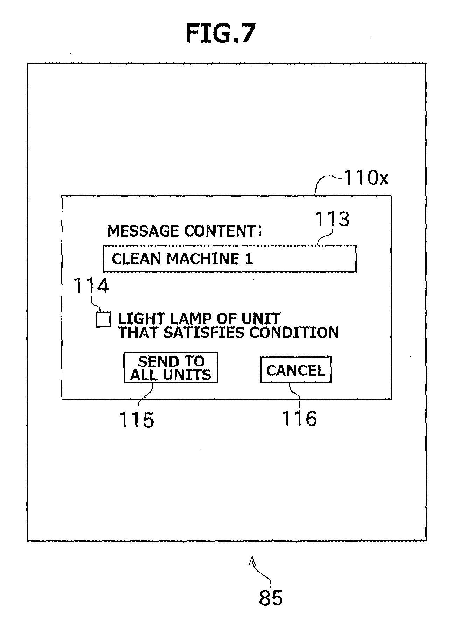

In an alternative configuration, the management apparatus 80 can transmit the message alone instead of transmitting the message by adding to the analysis graph image 111. A message transmission verification window 110x used in this case is illustrated in FIG. 7. In the message transmission verification window 110x, the user of the management apparatus 80 inputs the content of the message to be transmitted in the message text box 113, checks the object unit lighting check box 114 where necessary, and clicks the send to all units button 115. With this configuration, the message can be collectively transmitted to plural automatic winders 60 (the machine control apparatus 11) without the analysis graph image 111 being included, and therefore the instructions and intentions of the user can be more flexibly and quickly transmitted. When transmitting the message alone, the input of the message into the message text box 113 can be performed while seeing the analysis graph image 111 on the screen illustrated in FIG. 4.

As explained above, the management apparatus 80 according to the present embodiment includes the communication section 91, the operation information input section 92, the analysis section 94, the transmission section 95, and the message input section 96. The communication section 91 communicates with the machine control apparatus 11 of the automatic winder 60. The operation information input section 92 receives input of the operation information about the automatic winder 60. The analysis section 94 analyzes the operation information input from the operation information input section 92. The transmission section 95 transmits the result of the analysis by the analysis section 94 to the machine control apparatus 11 by using the communication section 91. The message input section 96 receives input of the message. When transmitting the analysis result to the machine control apparatus 11, the transmission section 95 transmits the analysis result together with the message input in the message input section 96.

With this configuration, when transmitting the analysis result from the management apparatus 80 to the machine control apparatus 11 of the respective automatic winders 60, the user of the management apparatus 80 can add supplementary explanation to the analysis result, the operation to be instructed, and other information to be transmitted as a message. Accordingly, necessary information can be easily and securely transmitted to the operators and the like of the automatic winder 60, and thus information about the analysis result can be smoothly transmitted.

In the management apparatus 80 according to the present embodiment, the operation information input section 92 receives input of the operation information about the automatic winder 60 via the communication section 91.

Accordingly, the operation information can be easily input to the management apparatus 80.

The management apparatus 80 according to the present embodiment is configured as the host management apparatus for the plural machine control apparatuses 11.

Accordingly, a reasonable configuration can be implemented in which the operation information about the automatic winder 60 is analyzed by the management apparatus 80, which is the host management apparatus, and the management apparatus 80 distributes the message to the respective machine control apparatus 11 together with the analysis result.

In the management apparatus 80 according to the present embodiment, the operation information input section 92 receives input of setting information for the automatic winder 60 in addition to the operation information. The analysis section 94 analyzes the operation information and the setting information.

With this configuration, an analysis from wider viewpoints can be implemented.

In the management apparatus 80 according to the present embodiment, the transmission section 95 can transmit a command that instructs the operation of the automatic winder 60 to the machine control apparatus 11 via the communication section 91.

Accordingly, in addition to transmitting the analysis result and the message to the automatic winder 60, the user of the management apparatus 80 can cause the automatic winder 60 that is the transmission destination to perform a specific operation. With this configuration, a state can be created in which the operators and the like of the automatic winder 60 can easily start and perform the operation in accordance with the content of the message, for example.

In the above-explained embodiment, the machine control apparatus 11 of the automatic winder 60 is configured, when a message is received, so as to light or flash the tower lamp 68 included in the automatic winder 60 even if no specific command has been received. However, in an alternative configuration, when transmitting an analysis result from the management apparatus 80 to the machine control apparatus 11, the management apparatus 80 can add a command that instructs lighting or flashing of the tower lamp 68 (notification command) to the analysis result so that the machine control apparatus 11 of the automatic winder 60 can light or flash the tower lamp 68 in accordance with the command.

In this configuration, the operators and the like of the automatic winder 60 can be appropriately prompted by the lit or flashed tower lamp 68 to check the analysis result.

The management apparatus 80 according to the present embodiment also includes the image conversion section 97 that converts the character string message input in the message input section 96 into an image. The transmission section 95 transmits the message having been converted into an image by the image conversion section 97 to the machine control apparatus 11.

Accordingly, because it is not necessary to prepare font data for drawing the character string on the side of each machine control apparatus 11 for displaying the message, the overall configuration can be made simple. Conversion of the image by the image conversion section 97 is not compulsory. If the conversion by the image conversion section 97 is not executed, for example, the transmission section 95 can be configured to send the message to the machine control apparatus 11 in the form of text data.

The management apparatus 80 according to the present embodiment is configured so as to transmit the message input in the message input section 96 to the machine control apparatus 11 without including the message in the analysis result.

With this configuration, because the message is transmitted separately from the analysis result, information can be more flexibly transmitted.

In the present embodiment, the machine control apparatus 11 included in the automatic winder 60 includes the communication section 71, the transmission section 73, the receiving section 74, and the display 65. The communication section 71 communicates with the management apparatus 80. The transmission section 73 transmits operation information about the automatic winder 60 to the management apparatus 80 via the communication section 71. The receiving section 74 receives the result of the analysis of the operation information from the management apparatus 80 via the communication section 71. The display 65 displays the analysis result received from the management apparatus 80. When a message is received from the management apparatus 80 together with the analysis result, the display 65 displays the message as well.

With this configuration, the message added when the analysis result is transmitted from the management apparatus 80 to the machine control apparatus 11 of the automatic winder 60 can be displayed on the display 65. Accordingly, because the information that the user of the management apparatus 80 intends to inform can be easily and securely transmitted to the operators and the like of the automatic winder 60 in the form of a message, information about the analysis result can be smoothly transmitted.

In the machine control apparatus 11 according to the present embodiment, the analysis result and the message are displayed on the display 65 that can display information.

With this configuration, the message can be transmitted to the operators and the like of the automatic winder 60 by a simple and convenient method.

The machine control apparatus 11 according to the present embodiment includes the operation control section 77 that controls the operation of the automatic winder 60. When a command that instructs the operation of the automatic winder 60 is received, the operation control section 77 starts the operation of the automatic winder 60 in accordance with the command.

With this configuration, not only the message can be displayed on the display 65 but also the automatic winder 60 can be caused to perform a specific operation in accordance with the command. Accordingly, an environment can be created in which the operators and the like of the automatic winder 60 can easily start and perform the operation in accordance with the content of the message transmitted from the management apparatus 80, for example.

The machine control apparatus 11 according to the present embodiment is configured, when an analysis result (or an analysis result and a message) is received, so as to light or flash the tower lamp 68 included in the automatic winder 60 even if no specific command has been received. However, in an alternative configuration, the operation control section 77 can be configured, when a command relating to lighting or flashing the tower lamp 68 (notification command) is received from the management apparatus 80 together with the analysis result, so as to light or flash the tower lamp 68 included in the automatic winder 60.

In this configuration, the operators and the like of the automatic winder 60 can be appropriately prompted by the lit or flashed tower lamp 68 to check the analysis result.

The machine control apparatus 11 according to the present embodiment includes the tower lamp controller 76 that controls the operation of the tower lamp 68 included in the automatic winder 60. Upon receiving the analysis result, the tower lamp controller 76 lights or flashes the tower lamp 68.

With this configuration also, the operators and the like of the automatic winder 60 can be appropriately prompted by the tower lamp 68 to check the analysis result.

In the machine control apparatus 11 according to the present embodiment, the receiving section 74 can receive a message without including an analysis result. Upon receiving the message, the display 65 displays the message.

With this configuration, because the message received separately from the analysis result can be displayed on the display 65, information can be more flexibly transmitted.

The machine control apparatus 11 according to the present embodiment also includes the message status management section 75 which can store therein at least status information about whether the message has been seen.

With this configuration, because whether the message is seen by the operators and the like of the automatic winder 60 can be checked, information can be more securely transmitted.

The automatic winder management system 100 according to the present embodiment includes the automatic winder 60 and the management apparatus 80. The automatic winder 60 includes the machine control apparatus 11. The management apparatus 80 manages the automatic winder 60. The management apparatus 80 includes the communication section 91, the operation information input section 92, the analysis section 94, the transmission section 95, and the message input section 96. The communication section 91 communicates with the machine control apparatus 11. The operation information input section 92 receives input of the operation information about the automatic winder 60. The analysis section 94 analyzes the operation information input into the operation information input section 92. The transmission section 95 transmits the result of the analysis performed by the analysis section 94 to the machine control apparatus 11 via the communication section 91. The message input section 96 receives input of the message. The machine control apparatus 11 of the automatic winder 60 includes the communication section 71, the receiving section 74, and the display 65. The communication section 71 communicates with the management apparatus 80. The receiving section 74 receives the result of the analysis of the operation information from the management apparatus 80 via the communication section 71. The display 65 displays the analysis result received from the management apparatus 80. When transmitting the analysis result to the machine control apparatus 11, the transmission section 95 of the management apparatus 80 transmits the analysis result together with the message input in the message input section 96. When a message is received from the management apparatus 80 together with the analysis result, the display 65 of the machine control apparatus 11 displays the message as well.

With this configuration, when transmitting the analysis result from the management apparatus 80 to the machine control apparatus 11 of the respective automatic winders 60, by operating the management apparatus 80, the user of the management apparatus 80 can add desired information to the analysis result as a message, and the message is displayed on the side of the automatic winder 60. Accordingly, because necessary information can be easily and securely transmitted to the operators and the like of the automatic winder 60, information about the analysis result can be smoothly transmitted.

In the automatic winder management system 100 according to the present embodiment, the management apparatus 80 includes the information storage section 93 that stores therein the operation information input into the operation information input section 92. The machine control apparatus 11 of the automatic winder 60 includes the information storage section 72 that stores therein the operation information about the corresponding automatic winder 60. The information storage section 93 is configured so as to store therein the operation information for a time period longer than the time period for which the operation information can be stored in the information storage section 72.

With this configuration, the result of analysis of the operation information for a long time period can be obtained on the side of the management apparatus 80 without using a large-capacity storage device for the information storage section 72 included in the respective automatic winders 60. Accordingly, the configuration on the side of the automatic winder 60 can be simplified.

In the present embodiment, the automatic winders 60 are managed by a method including an operation information inputting step, an analysis step, a message inputting step, a transmission step, and an outputting step. These steps will be explained in detail below. In the operation information inputting step, operation information about the automatic winder 60 is input into the management apparatus 80. In the analysis step, the operation information is analyzed by the management apparatus 80. In the message inputting step, a message is input into the management apparatus 80. In the transmission step, the result of the analysis by the analysis section 94 is transmitted together with the message from the management apparatus 80 to the machine control apparatus 11 of the automatic winder 60. In the outputting step, the machine control apparatus 11 outputs the message together with the analysis result.

With this configuration, when transmitting the analysis result from the management apparatus 80 to the machine control apparatus 11 of the respective automatic winders 60, the user of the management apparatus 80 can add desired information to the analysis result as a message, and cause the message to be output by the machine control apparatus 11 by operating the management apparatus 80. Accordingly, because necessary information can be easily and securely transmitted to the operators and the like of the automatic winder 60, information about the analysis result can be smoothly transmitted.

Exemplary embodiments of the present invention have been explained above; however, the configurations explained above can be changed as explained below.

The means of the connection between the machine control apparatus 11 of the automatic winder 60 and the management apparatus 80 is not limited to the LAN 101. That is, the machine control apparatus 11 of the automatic winder 60 and the management apparatus 80 can be connected to each other via any other type of network. Moreover, the network is not limited to a wired network, and a wireless network can be used.

The number of the automatic winders 60 managed by the management apparatus 80 can be a desired number. That is, this number can be one, or two or more.

In the above-explained embodiments, the management apparatus 80 is configured as a desktop type personal computer; however, the configuration of the management apparatus 80 is not limited to this. More specifically, the management apparatus 80 can be configured as a portable tablet computer, for example. In this case, a configuration can be employed in which the message is input by using a touch panel instead of the keyboard 86.

In the above-explained embodiment, the management apparatus 80 is configured as a computer arranged separately from the machine control apparatus 11; however, configuration of the management apparatus 80 is not limited to this. More specifically, a configuration is allowable in which one machine control apparatus 11 among the plural machine control apparatuses 11 of the plural automatic winders 60 is caused to perform the functions of the management apparatus.

The timing of transmission of the message is not limited to the timing designated by the user of the management apparatus 80. For example, a message notifying that the time for cleaning has come or a message notifying that the time for change of shifts has come can be transmitted at previously set time. Alternatively, the message can be transmitted at specific time intervals.

In the above-explained embodiment, the message input into the message input section 96 is transmitted from the management apparatus 80 to the automatic winder 60 (the machine control apparatus 11) as an image generated by conversion from the message. However, the form of the message to be transmitted is not limited to the one explained here. For example, the message can be transmitted as character string data.

The destination of transmission of the analysis result and the message is not limited to all the automatic winders 60 as in the above-explained embodiment. For example, some of the automatic winders 60 can be designated as the transmission destination and the analysis result and the message can be transmitted only to the designated automatic winders 60.

In the above-explained embodiment, the machine control apparatus 11 of the automatic winder 60 is configured, when a message is received together with the analysis result, to display the analysis result and the message on the display 65. However, the present invention is not limited to this. For example, a printer can be included and the analysis result and the message can be printed on a printing paper.

In the above-explained embodiment, the analysis result and the message received by the automatic winder 60 (the machine control apparatus 11) are simultaneously displayed on the display 65 as illustrated in FIG. 6. However, in an alternative configuration, the display on the display 65 can be switched between the display of the analysis result (the analysis graph image 121) and the display of the message (the message image 122) performed in accordance with an appropriate operation on the input keys 66, for example.

The notification performed when the analysis result and/or the message is received can be alternatively performed by an acoustic method by using a beeper, for example, instead of using the visual notification using the tower lamp 68.

The status stored by the message status management section 75 included in the machine control apparatus 11 is not limited to the message already-read/unread status. In an alternative configuration, the message status management section 75 included in the machine control apparatus 11 can store therein a status as to whether the operators and the like have completed the operation instructed in the message, for example.

In an alternative configuration, the result obtained by the analysis section 94 can be transmitted from the management apparatus 80 to the automatic winder 60 (the machine control apparatus 11) in the form of data in the text format, for example, instead of the form of an image (graph). Examples of the data of the text format includes the comma separated value (CSV) format in which numerical values of the analysis result are represented as comma-delimited data, for example. The form of display of the analysis result on the display 65 of the machine control apparatus 11 is not limited to the display in the form of a graph. The analysis result can be displayed as numerical values, for example.

The command transmitted from the management apparatus 80 to instruct the operation of the automatic winder 60 is not limited to a command relating to lighting the unit lamp 43 of the winder unit 16 that needs maintenance as in the embodiment explained above. A variety of other commands can be transmitted in accordance with the situation, such as a command that instructs flashing the unit lamp 43 instead of lighting it, a command that instructs suspending the feeding of the yarn feeding bobbins 21 from the yarn feeding bobbin supplying device 52, a command that instructs generating an operation log file for the machine control apparatus 11, and a command that instructs generating analysis data (a file) on the side of the machine control apparatus 11. If data accumulated in the management apparatus 80 are necessary to generate the analysis data on the machine control apparatus 11, the machine control apparatus 11 can be configured to communicate with the management apparatus 80 to acquire the necessary data.

The management apparatus 80 can be connected to a server of the manufacturer of the textile machines via the Internet, for example. In this case, an operation can be performed in which a message such as communications, guidance, or the like from the manufacturer of the textile machines is first received by the management apparatus 80 from the server and the message is then distributed from the management apparatus 80 to the respective automatic winders 60.

In the above-explained embodiment, one unit controller 50 is provided per one winder unit 16. However, in an alternative configuration, one unit controller 50 can be provided per plural (e.g., four) winder units 16 so that one unit controller 50 can control the plural winder units 16.

The above-explained management apparatus, the management system, and the management method are not limited to the automatic winder 60 for their application and can also be applied to other textile machines (e.g., spinning machines).

A management apparatus according to an aspect of the present invention includes a communication section, an operation information input section, an analysis section, and a transmission section. The communication section communicates with a control apparatus of a textile machine. The operation information input section receives input of operation information about the textile machine. The analysis section analyzes the operation information input to the operation information input section. The transmission section transmits a result of the analysis obtained in the analysis section to the control apparatus via the communication section. The message input section receives input of a message. The transmission section, when transmitting the analysis result to the control apparatus, transmits the analysis result together with the message input into the message input section.

With this configuration, when the manager who operates the management apparatus transmits the analysis result from the management apparatus to the control apparatus of the respective textile machines, can add desired information as a message by operating the management apparatus. Accordingly, because necessary information can be readily and securely transmitted to the operators and the like of the textile machines, transmission of information about the analysis result can be smoothly performed.

In the management apparatus, it is preferable that the operation information input section receives input of the operation information about the textile machine via the communication section.

With this configuration, the operation information can be easily input to the management apparatus.

It is preferable that the management apparatus is a host management apparatus that manages one or a plurality of the control apparatuses.

Accordingly, a reasonable configuration can be implemented in which the operation information about the textile machines is analyzed by the host management apparatus and a message, together with the analysis result, is distributed to the respective control apparatuses.

In the management apparatus, it is preferable that the operation information input section receives input of the operation information and setting information for the textile machine, and the analysis section analyzes the operation information and the setting information.

With this configuration, an analysis from a wider variety of viewpoints can be implemented.

In the management apparatus, it is preferable that the transmission section is capable of transmitting a command for instructing an operation of the textile machine to the control apparatus via the communication section.

Accordingly, in addition to transmitting the analysis result and the message, the user of the management apparatus can cause the textile machine that is the transmission destination to perform a specific operation. With this configuration, an environment can be created in which the operators and the like of the textile machine can easily start and perform the operation in accordance with the content of the message, for example.

In the management apparatus, it is preferable that, when transmitting the analysis result to the control apparatus, the transmission section adds a notification command for instructing a notification operation of the textile machine and transmits the analysis result together with the added notification command.

Accordingly, by performing the notification operation, the operators and the like of the textile machine can be prompted to check the analysis result.

In the management apparatus, it is preferable that the management apparatus includes an image conversion section that converts a character string message input in the message input section into an image. The transmission section transmits the message having been converted by the image conversion section into an image to the control apparatus.

Accordingly, because it is not necessary to prepare font data for drawing the character string on the side of each textile machine (control apparatus) for displaying the message, the overall configuration can be simplified.

In the management apparatus, it is preferable that the transmission section is capable of transmitting the message input into the message input section to the control apparatus in a form not including the analysis result.

With this configuration, because the message can be transmitted separately from the analysis result, information can be more flexibly transmitted.

A control apparatus included in a textile machine according to another aspect of the present invention includes a communication section, a transmission section, a receiving section, and an output section. The communication section communicates with a management apparatus. The transmission section transmits operation information about the textile machine to the management apparatus via the communication section. The receiving section receives a result of an analysis performed on the operation information from the management apparatus via the communication section. The output section outputs the analysis result received from the management apparatus. The output section, upon receiving a message from the management apparatus together with the analysis result, outputs the received message.

With this configuration, the message added when the analysis result is transmitted from the management apparatus to the control apparatus of the textile machine can be displayed on the output section. Accordingly, because the information that the manager who operates the management apparatus intends to send can be easily and securely transmitted to the operators and the like of the textile machine in the form of a message, information about the analysis result can be smoothly transmitted.

In the control apparatus, it is preferable that the output section is a display section capable of displaying information.

With this configuration, the message can be transmitted to the operators and the like of the textile machine by a simple and convenient method.

It is preferable that the control apparatus includes an operation control section that controls an operation of the textile machine. The operation control section, when a command relating to the operation of the textile machine is received from the management apparatus, controls operation of the textile machine in accordance with the received command.

With this configuration, not only the message can be displayed on the output section but also the textile machine can be caused to perform a specific operation in accordance with the command. Accordingly, an environment can be created in which the operators and the like of the textile machine can easily start and perform the operation in accordance with the content of the message transmitted from the management apparatus, for example.

In the control apparatus, it is preferable that, if a notification command is received from the management apparatus together with the analysis result, the operation control section controls operation of a notification section included in the textile machine.

Accordingly, by using the notification section, the operators and the like of the textile machine can be prompted to check the analysis result.

It is preferable that the control apparatus includes a notification control section that controls an operation of a notification section included in the textile machine. The notification control section, upon receiving the analysis result from the management apparatus, performs a control for operating the notification section.

With this configuration also, the operators and the like of the textile machine can be appropriately prompted to check the analysis result by using the notification section.

In the control apparatus, it is preferable that the receiving section receive the message in a form not including the analysis result. The output section outputs the message upon receiving the message.

With this configuration, because the message received not together with an analysis result can be displayed on the output section, information can be more flexibly transmitted.

It is preferable that the control apparatus includes a message status management section capable of storing therein at least a status as to whether the message has been seen.

With this configuration, because whether the message has been seen by the operators and the like of the textile machine can be verified, information can be more securely transmitted.

A textile machine management system according to still another aspect of the present invention includes a textile machine and a management apparatus. The textile machine includes a control apparatus. The management apparatus manages the textile machine. The management apparatus includes a management apparatus-side communication section, an operation information input section, an analysis section, a transmission section, and a message input section. The management apparatus-side communication section communicates with the control apparatus. The operation information input section receives input of operation information about the textile machine. The analysis section analyzes the operation information input to the operation information input section. The transmission section transmits a result of an analysis obtained in the analysis section to the control apparatus via the management apparatus-side communication section. The message input section receives input of a message. The control apparatus of the textile machine includes a textile machine-side communication section, a receiving section, and an output section. The textile machine-side communication section communicates with the management apparatus. The receiving section receives a result of an analysis performed on the operation information from the management apparatus via the textile machine-side communication section. The output section outputs the analysis result received from the management apparatus. The transmission section of the management apparatus, when transmitting the analysis result to the control apparatus, transmits the analysis result together with the message input to the message input section. The output section of the control apparatus, upon receiving the message from the management apparatus together with the analysis result, outputs the received message.

With this configuration, when transmitting the analysis result from the management apparatus to the control apparatus of the respective textile machines, the manager who operates the management apparatus can add desired information to the analysis result as a message so that the message is displayed on the side of the textile machine by operating the management apparatus. Accordingly, because necessary information can be easily and securely transmitted to the operators and the like of the textile machine, information about the analysis result can be smoothly transmitted.

It the textile machine management system, it is preferable that, the management apparatus includes a first storage section that stores therein the operation information input to the operation information input section, the control apparatus of the textile machine includes a second storage section that stores therein operation information about the textile machine, and the first storage section is capable of storing therein operation information corresponding to a time period longer than a time period for which operation information can be stored in the second storage section.

With this configuration, the result of analysis of the operation information for a long time period can be obtained on the side of the management apparatus without using a large-capacity storage device for the second storage section included in the respective textile machine. Accordingly, the configuration on the side of the textile machine can be simplified.

A management method for a textile machine according to still another aspect of the present invention includes inputting operation information about the textile machine into a management apparatus; analyzing the operation information by the management apparatus; inputting a message by the management apparatus; transmitting a result of analysis obtained in the analyzing to a control apparatus included in the textile machine together with the message; and outputting the message together with the analysis result in the control apparatus.

With this configuration, when transmitting the analysis result from the management apparatus to the control apparatus of the respective textile machine, the manager who operates the management apparatus can add desired information to the analysis result as a message and allow the message to be output by the control apparatus by operating the management apparatus. Accordingly, because necessary information can be easily and securely transmitted to the operators and the like of the textile machine, information about the analysis result can be smoothly transmitted.

## Claims

1. A management apparatus comprising:
a communication section (91) that communicates with a control apparatus (11) of a textile machine (60);
an operation information input section (92) that receives input of operation information about the textile machine (60);
an analysis section (94) that analyzes the operation information input to the operation information input section (92);
a transmission section (95) that transmits a result of the analysis obtained in the analysis section (94) to the control apparatus (11) via the communication section (91); and
a message input section (96) that receives input of a message, **characterized in that**
when transmitting the analysis result to the control apparatus (11), the transmission section (95) transmits the analysis result together with the message input to the message input section (96).

2. The management apparatus as claimed in Claim 1, **characterized in that** the operation information input section (92) receives input of the operation information about the textile machine (60) via the communication section (91).

3. The management apparatus as claimed in Claim 1 or 2, **characterized in that**
the operation information input section (92) receives input of the operation information and setting information for the textile machine (60), and
the analysis section (94) analyzes the operation information and the setting information.

4. The management apparatus as claimed in any one of Claims 1 to 3, **characterized in that** the transmission section (95) is capable of transmitting a command for instructing an operation of the textile machine (60) to the control apparatus (11) via the communication section (91).

5. The management apparatus as claimed in any one of Claims 1 to 4, **characterized in that** when transmitting the analysis result to the control apparatus (11), the transmission section (95) adds a notification command for instructing a notification operation of the textile machine (60) and transmits the analysis result together with the added notification command.

6. The management apparatus as claimed in any one of Claims 1 to 5, **characterized in that** the transmission section (95) is capable of transmitting the message input to the message input section (96) to the control apparatus (11) in a form not including the analysis result.

7. The management apparatus as claimed in any one of Claims 1 to 6, **characterized in that** the message input section (96) is capable of receiving the input of the message with the analysis result being displayed.

8. The management apparatus as claimed in any one of Claims 1 to 7, **characterized in that** operation completion information that indicates that an operation instructed in the message transmitted by the transmission section (95) has been completed is stored and the operation completion information is updated on the basis of operation completion information received from the control apparatus (11) via the communication section (91).

9. A control apparatus included in a textile machine comprising:
a communication section (71) that communicates with a management apparatus (80);
a transmission section (73) that transmits operation information about the textile machine (60) to the management apparatus (80) via the communication section (71);
a receiving section (73) that receives a result of an analysis performed on the operation information from the management apparatus (80) via the communication section (71);
an output section (65) that outputs the analysis result received from the management apparatus (80),
**characterized in that**, upon receiving a message from the management apparatus (80) together with the analysis result, the output section (65) outputs the received message.

10. The control apparatus as claimed in Claim 9, **characterized in that** the output section (65) is a display section capable of displaying information.

11. The control apparatus as claimed in Claim 9 or 10, further comprising:
an operation control section (77) that controls an operation of the textile machine (60),
**characterized in that** when a command relating to the operation of the textile machine (60) is received from the management apparatus (80), the operation control section (77) controls operation of the textile machine (60) in accordance with the received command.

12. The control apparatus as claimed in Claim 11, **characterized in that** if a notification command is received from the management apparatus (80) together with the analysis result, the operation control section (77) controls operation of a notification section (68) included in the textile machine (60).

13. The control apparatus as claimed in Claim 9 or 10, further comprising:
a notification control section (76) that controls an operation of a notification section (68) included in the textile machine (60),
**characterized in that**, upon receiving the analysis result from the management apparatus (80), the notification control section (76) performs a control for operating the notification section (68).

14. The control apparatus as claimed in any one of Claims 9 to 13, **characterized by** a message status management section (75) capable of storing therein at least a status as to whether the message has been seen.

15. The control apparatus as claimed in any one of Claims 9 to 14, further comprising:
an operation status management section capable of storing therein operation completion information that indicates whether an operation instructed by the management apparatus (80) has been completed,
**characterized in that** the transmission section (73) transmits the operation completion information to the management apparatus (80) via the communication section (71).

16. A textile machine management system comprising a textile machine (60) and a management apparatus (80), the textile machine (60) having a control apparatus (11) and the management apparatus (80) manages the textile machine (60), wherein
the management apparatus (80) includes
a management apparatus-side communication section (91) that communicates with the control apparatus (11);
an operation information input section (92) that receives input of operation information about the textile machine (60);
an analysis section (94) that analyzes the operation information input to the operation information input section (92);
a transmission section (95) that transmits a result of an analysis obtained in the analysis section (94) to the control apparatus (11) via the management apparatus-side communication section (91); and
a message input section (96) that receives input of a message, and
the control apparatus (11) of the textile machine (60) includes
a textile machine-side communication section (71) that communicates with the management apparatus (80);
a receiving section (74) that receives a result of an analysis performed on the operation information from the management apparatus (80) via the textile machine-side communication section (71); and
an output section (65) that outputs the analysis result received from the management apparatus (80),**characterized in that**
when transmitting the analysis result to the control apparatus (11), the transmission section (95) of the management apparatus (80) transmits the analysis result together with the message input to the message input section (96), and
upon receiving the message from the management apparatus (80) together with the analysis result, the output section (65) of the control apparatus (11) outputs the received message.

17. The textile machine management system as claimed in Claim 16, **characterized in that**
the management apparatus (80) includes a first storage section (93) that stores therein the operation information input to the operation information input section (92),
the control apparatus (11) of the textile machine (60) includes a second storage section (72) that stores therein operation information about the textile machine (60), and
the first storage section (93) is capable of storing therein operation information corresponding to a time period longer than a time period for which operation information can be stored in the second storage section (72).

18. A management method for a textile machine **characterized by**:
inputting operation information about the textile machine (60) to a management apparatus (80);
analyzing the operation information by the management apparatus (80);
inputting a message by the management apparatus (80);
transmitting a result of analysis obtained in the analyzing to a control apparatus (11) included in the textile machine (60) together with the message; and
outputting the message together with the analysis result in the control apparatus.
